# EUROPEAN PATENT APPLICATION

(11) **EP 2 837 895 A2**
(43) Date of publication of application: **18.02.2015**
(21) Application number: 14181201.6
(22) Date of filing: 16.06.2010
(51) Int. Cl.: F24D 10/00, F25B 30/06, F24D 19/10, F24D 11/02

(54) **District energy sharing system**

(30) Priority: 16.06.2009 US 187626 P
(62) Divisional of application: 10788581.6
(71) Applicant: Dec Design Mechanical Consultants Ltd., New Westminster, British Columbia V3M 1B2 (CA)
(72) Inventor: Vaughan, William, West Vancouver, British Columbia V7S 2W8 (CA); Lindquist, Erik, Sooke, British Columbia V9Z 0W9 (CA)
(74) Representative: Wightman, David Alexander

(57) **Abstract**

A district energy sharing system comprises a thermal energy circuit and a grey water injection assembly for supplying grey water to the thermal energy circuit. A client building heat transfer apparatus for transferring thermal energy between the thermal energy circuit and a client building. A grey water take-off conduit a grey water take-off conduit fluidly coupled to a warm water conduit of the thermal energy circuit and for fluidly coupling to a client building such that grey water can be supplied to the building for non-potable uses.

## Description

### Field of Invention

This invention relates to a district energy sharing system for sharing thermal energy between a server and a client in a district.

### Background

Traditional building heating and cooling systems use primary high grade energy sources such as electricity or fossil fuels to provide space heating and/or cooling, and to heat or cool water used in the building. The process of heating or cooling the building spaces and water converts this high grade energy into low grade waste heat with high entropy which leaves then the building and is returned to the environment. For example, heated water from showers or sinks will be discharged into the sewer, and thermal energy in heated air will radiate and conduct through exterior walls and into atmosphere.

Building heating and cooling systems consume major quantities of non-renewable resources and contribute substantially to global warming. Also, many industry processes discharge large quantities of low grade thermal energy that causes further warming of water courses and atmosphere.

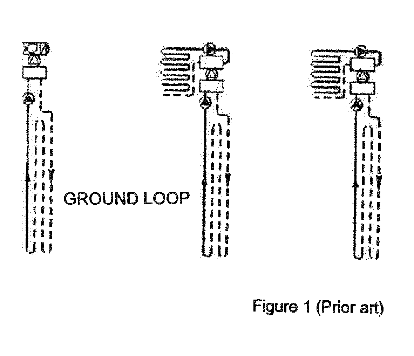

Attempts have been made to utilize natural heat source and heat sinks to provide efficient, environmentally friendlier approaches to heating and cooling a building; for example, and as shown in Figure 1 (PRIOR ART), buildings in a district can each be served individually by independent ground source heat pump systems. This approach unfortunately, requires significant infrastructure costs as each homeowner would need to install a heat pump system with a geothermal ground loop.

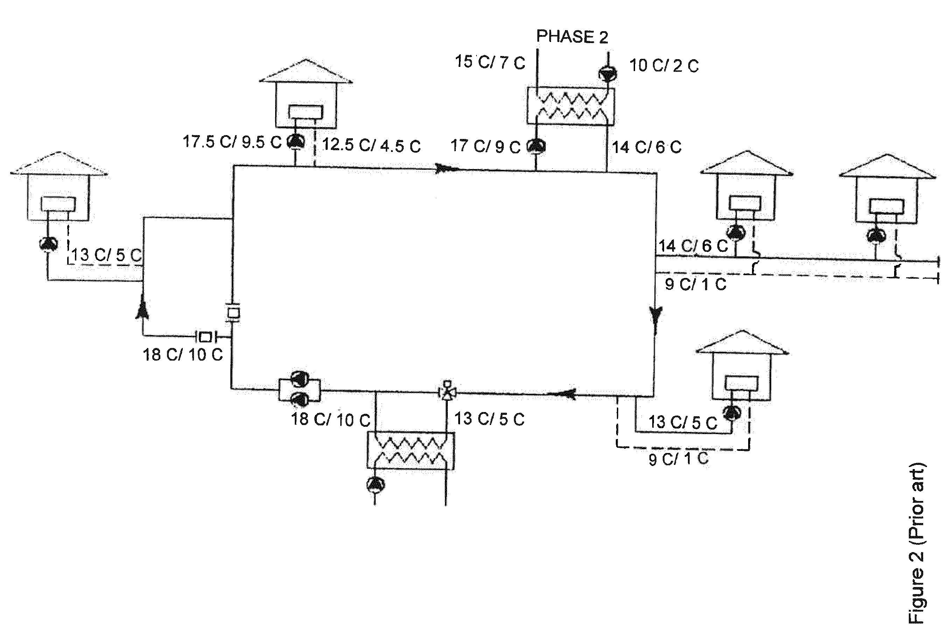

A typical building district is shown schematically in Figure 2 (PRIOR ART) and comprising client buildings each fluidly coupled to a single-pipe warm water distribution circuit. In this schematic, a heat source (e.g. a mechanical plant having a geothermal ground loop) is thermally coupled to the circuit by a heat exchanger; another heat exchanger is provided to thermally couple the circuit to another fluid flow distribution circuit in an adjacent district. Each building can be provided with a heat pump which is thermally coupled to the circuit and which converts thermal energy from the circuit into useful heat for domestic space or water heating. One particular disadvantage with such a district is that each building is serially connected to the circuit and thus the overall efficiency of building heat pump operation is compromised as downstream heat pumps will be working harder when all upstream heat pumps are drawing heat from the circuit. Efficient operation is also compromised when some building heat pumps are heating and some are cooling, as there will be large temperature variances along the circuit and additional measures will need to be employed to maintain the temperature of the circuit within its design operating range.

It would therefore be useful to provide an improved and cost-effective system to heat and/or cool buildings which re-uses at least some low grade waste heat produced as a result of domestic space and water heating and cooling processes.

### Summary

According to one aspect of the invention, there is provided district energy sharing system comprising a thermal energy circuit and a heat pump assembly. The thermal energy circuit comprises: a warm liquid conduit for flow of a heat transfer liquid therethough at a first temperature; and a cool liquid conduit for flow of the heat transfer liquid therethrough at a second temperature that is lower than the first temperature. The heat pump assembly comprises: a reversible heat pump; a building heat exchanger thermally coupled to the heat pump and for thermally coupling to a client building; a circuit heat exchanger thermally coupling the heat pump to the thermal energy circuit; piping fluidly coupling the circuit heat exchanger to the warm and cool liquid conduits; at least one circulation pump coupled to the piping; and a valve assembly comprising at least one control valve coupled to the piping and switchable between a heating mode wherein a fluid pathway is defined through the piping for flow of the heat transfer liquid from the warm liquid conduit through the circuit heat exchanger and to the cool liquid conduit, and a cooling mode wherein a fluid pathway is defined through the piping for flow of the heat transfer fluid from the cool liquid conduit through the heat exchanger and to the warm liquid conduit. The valve assembly can be further switchable into an off mode wherein the warm and cool liquid conduits are not in fluid communication with the heat exchanger through the piping.

The valve assembly can comprise a pair of three-way control valves wherein a first three-way control valve is fluidly coupled to the warm liquid conduit, cool liquid conduit, and an inlet of the circuit heat exchanger, and a second three-way control valve is fluidly coupled to the warm liquid conduit, cool liquid conduit, and an outlet of the circuit heat exchanger. When the valve assembly is in the heating mode the first three-way control valve is closed to the cool liquid conduit and open to the warm liquid conduit and the inlet of the circuit heat exchanger, and the second three-way control valve is closed to the warm liquid conduit and open to the cool water conduit and the outlet of the circuit heat exchanger.

Alternatively, the valve assembly can comprise a single four-way control valve having four ports and a rotary actuator. The four ports comprise a first port fluidly coupled to the warm liquid conduit, a second port fluidly coupled to an inlet of the circuit heat exchanger, a third port fluidly coupled to the cool liquid conduit, and a fourth port fluidly coupled to an outlet of the circuit heat exchanger. The rotary actuator fluidly couples the first and second ports and fluidly couples the third and fourth ports in the heating mode, and fluidly couples the first and fourth ports and fluidly couples the second and third ports in the cooling mode.

According to another aspect of the invention, a district energy sharing system comprising the thermal energy circuit and a grey water injection assembly. The grey water injection assembly comprises: a grey water supply conduit fluidly coupled to the warm or cool water conduit and for fluidly coupling to a grey water source such that grey water is supplied to the warm or cool water conduit; a pressure control device fluidly coupled to the grey water supply conduit or thermal energy circuit and operable to regulate water pressure within the thermal energy circuit; a client building heat transfer apparatus fluidly coupled to the warm and cool water conduits and for thermally coupling to a client building such that thermal energy can be transferred between the thermal energy circuit and the client building; and a grey water take-off conduit fluidly coupled to the warm water conduit and for fluidly coupling to a client building such that grey water can be supplied to the building for non-potable uses.

The grey water injection assembly can further comprise a filtration device fluidly coupled to the grey water supply conduit upstream of the pressure control device. The pressure control device can comprise at least one pump operable to increase the pressure of the grey water above the pressure of water in the thermal energy circuit. The pressure control device can further comprise at least one control valve and a cushion tank fluidly coupled to the pump and operable to vary the flow rate of grey water to the warm water conduit.

According to yet another aspect of the invention, district energy sharing system comprises a first and second thermal energy circuit, and a thermal energy transfer station for thermally coupling the first and second thermal energy circuits. The first and a second thermal energy circuit each comprisie: a warm liquid conduit for flow of a heat transfer liquid therethough at a first temperature; a cool liquid conduit for flow of the heat transfer liquid therethrough at a second temperature that is lower than the first temperature; and a circuit pump coupled to at least one of the warm and cool liquid conduits for pumping the heat transfer liquid therethrough. The thermal energy transfer station comprises at least one of a: liquid transfer assembly fluidly coupling the first and second thermal energy circuits and comprising a pump operable to flow heat transfer fluid therebetween; and a heat exchanger assembly thermally coupling and fluidly separating the first and second thermal energy circuits.

In one aspect the thermal energy transfer station comprises only the liquid transfer assembly, which further comprises: a warm liquid transfer conduit fluidly coupling the warm liquid conduits of the first and second thermal energy circuits; a cool liquid transfer conduit fluidly coupling the cool liquid conduits of the first and second thermal energy circuits; and a changeover assembly comprising piping fluidly coupled to the warm or cool liquid transfer conduits and to the pump, and at least one control valve fluidly coupled to the piping and operable in a first mode which defines a fluid pathway through the piping from the first thermal energy to the second thermal energy circuit, and a second mode which defines a fluid pathway through the piping from the second thermal energy circuit to the first thermal energy circuit.

In another aspect, the thermal energy transfer station comprises only the heat exchanger assembly, which further comprises: a liquid-to-liquid heat exchanger having a first heat transfer zone and a second heat transfer zone thermally coupled to but fluidly separated from the first heat transfer zone; first liquid transfer piping fluidly coupling the first heat transfer zone to the warm and cool liquid conduits of the first thermal energy circuit and second liquid transfer piping fluidly coupling the second heat transfer zone to the warm and cool liquid conduits of the second energy circuit; and a pair of transfer pumps each respectively fluidly coupled to the first and second liquid transfer piping and operable to flow liquid from the first thermal energy circuit through the first heat transfer zone, and to flow liquid from the second thermal energy circuit through the second heat transfer zone.

The thermal energy transfer station can further comprise a pressure control device and fluid conduit fluidly coupled to the first and second liquid transfer conduits, which is operable to regulate the pressure between the first and second thermal energy circuits. The pressure control device in this case comprises at least one of a pressure reducing control valve and a booster pump.

The thermal energy transfer station can further comprise at least one server plant. Each server plant comprises a heat pump assembly thermally coupling one of the first or second liquid transfer conduits to at least one of a heat source and a heat sink.

### Brief Description of Drawings

Figure 1 is a schematic of multiple buildings each individually serviced by independent ground source heat pump systems. (PRIOR ART)
Figure 2 is a schematic of multiple buildings each fluidly coupled to a single-pipe warm water supply circuit. (PRIOR ART)
Figure 3 is a schematic of a district energy sharing system according to one embodiment comprising a thermal energy circuit having a warm water conduit and a cool water conduit, which are both thermally coupled to multiple client buildings and to a thermal server plant in a district.
Figure 4 is a schematic of a district energy sharing system according to another embodiment comprising the thermal energy circuit thermally coupled to multiple client buildings and a thermal server plant in a district, wherein heat transfer apparatus in each building and in the server plant are illustrated.

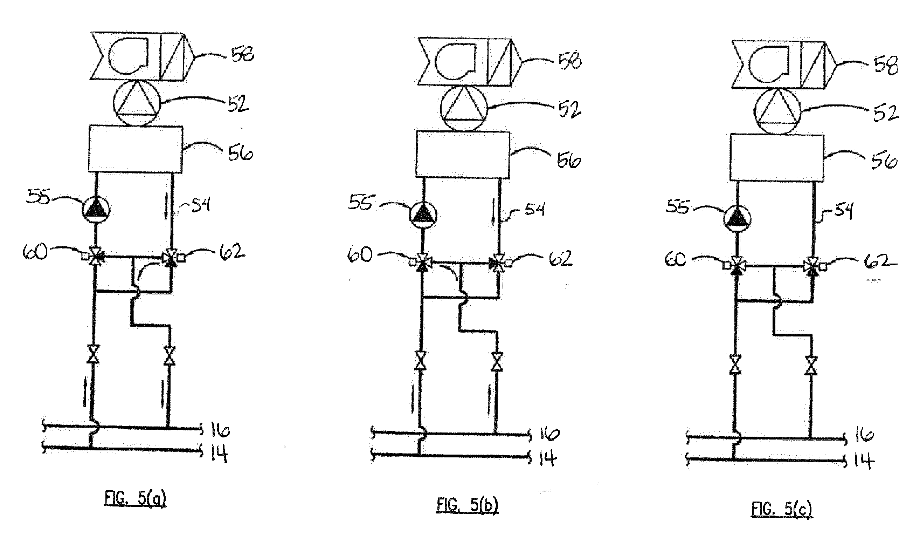

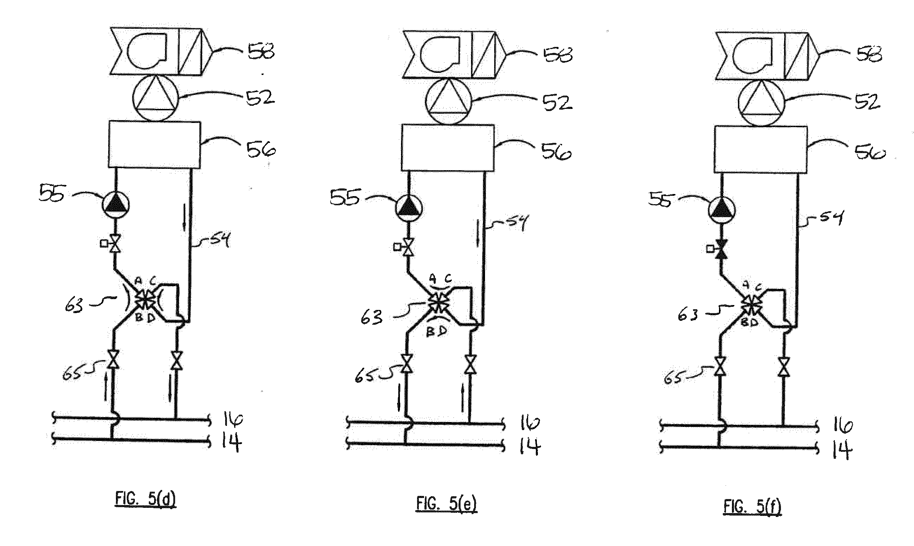

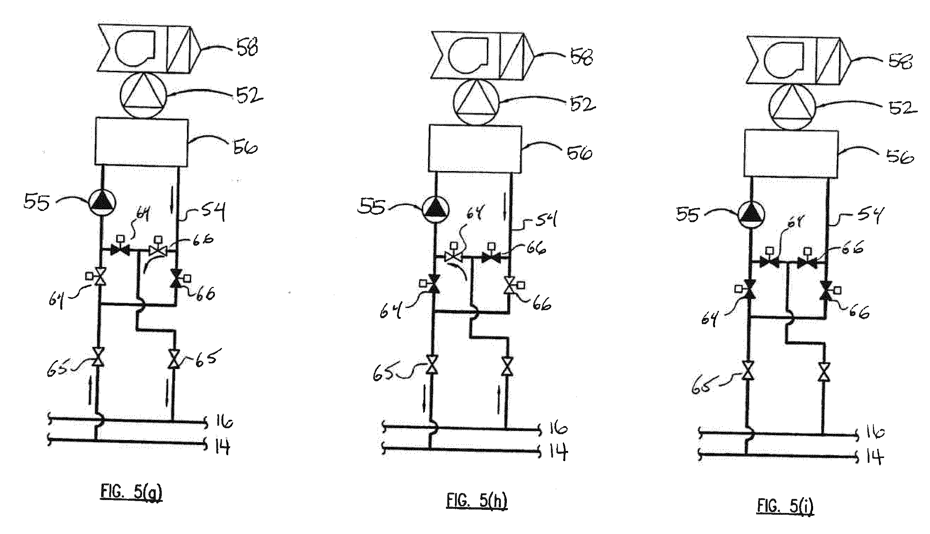

Figures 5(a) to (i) are schematic illustrations of a heat pump assembly in one client building, wherein Figures 5(a) to (c) show a heat pump assembly according to one embodiment having a reversible heat pump and a pair of three-way control valves configured to operate in a heating mode (Figure 5(a)), in a cooling mode (Figure 5(b)), and in an off mode (Figure 5(c)), and Figures (d) to (f) show a heat pump assembly according to another embodiment having a reversible heat pump and a single four-way control valve configured to operate in a heating mode (Figure 5(d)), in a cooling mode (Figure 5(e)), and in an off mode (Figure 5(f)), and Figures 5(g) to (i) shows a heat pump assembly according to yet another embodiment having a reversible heat pump and four two-way control valves.
Figure 6 is a schematic of a district energy sharing system according to another embodiment comprising a thermal server plant thermally coupled to the thermal energy circuit, and a multiple unit local heat transfer plant servicing multiple client buildings in the district also thermally coupled to the thermal energy circuit.
Figure 7 is a schematic of a district energy sharing system according to another embodiment comprising a thermal server plant and multiple client buildings each having a heat transfer apparatus and being directly thermally coupled to the warm and cool water conduits of the thermal energy circuit.
Figure 8 is a schematic of a district energy sharing system according to yet another embodiment comprising a combined multiple unit local heat transfer plant servicing multiple client buildings in a district and thermal server plant.

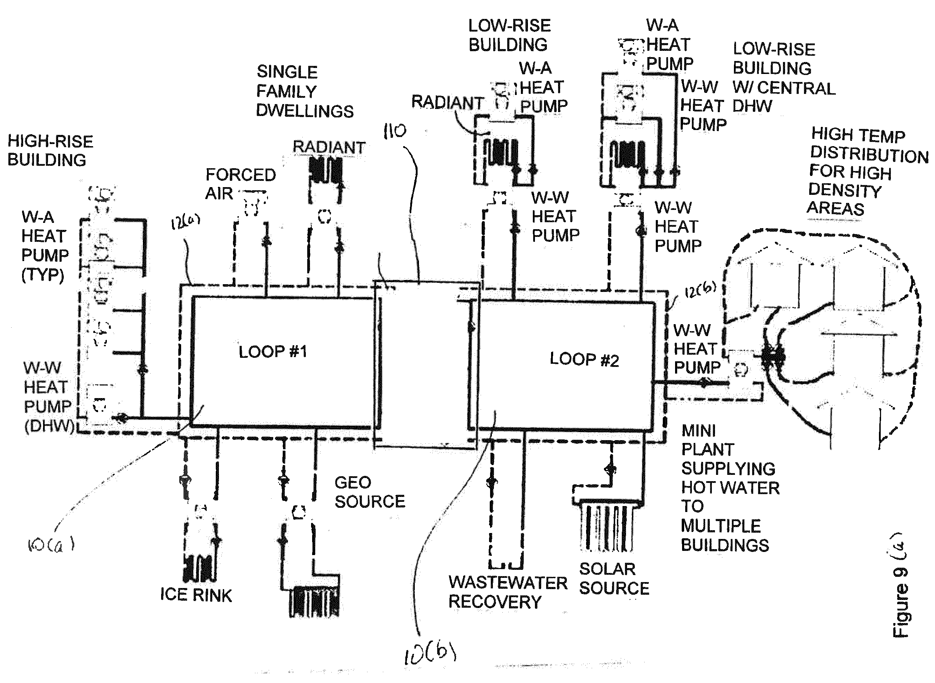

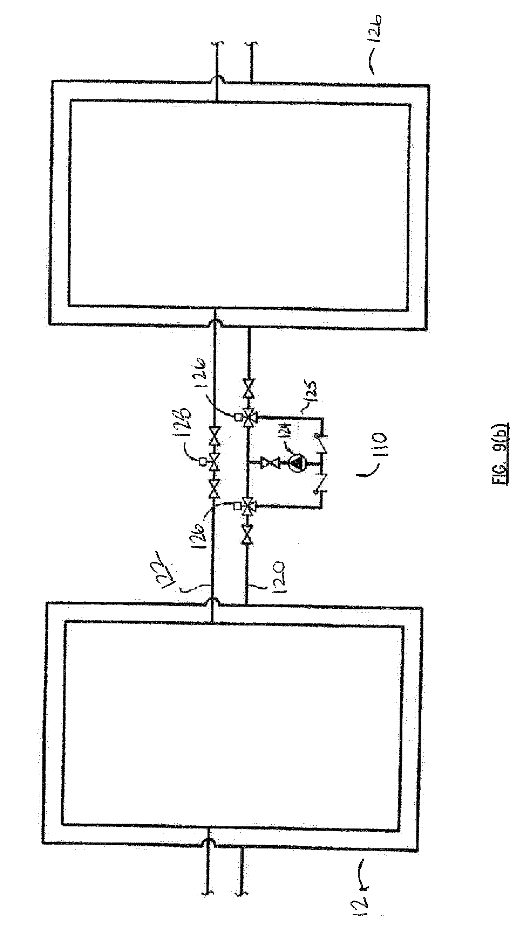

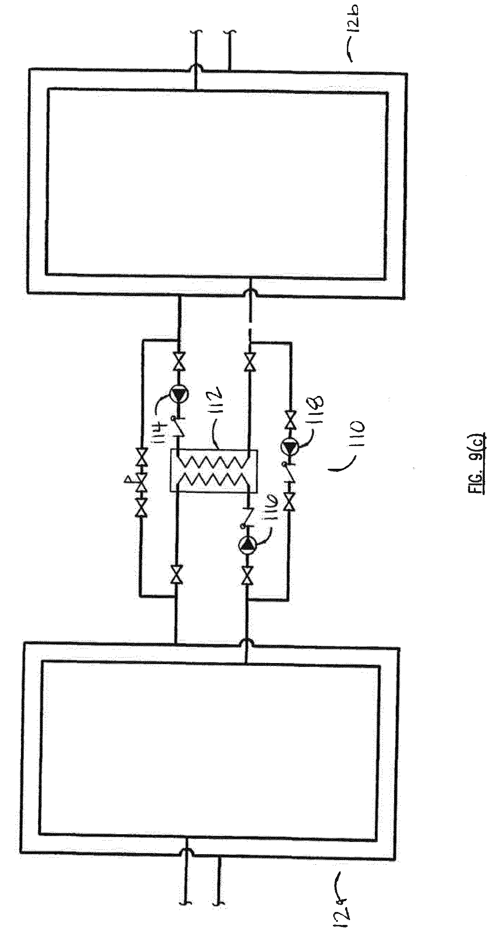

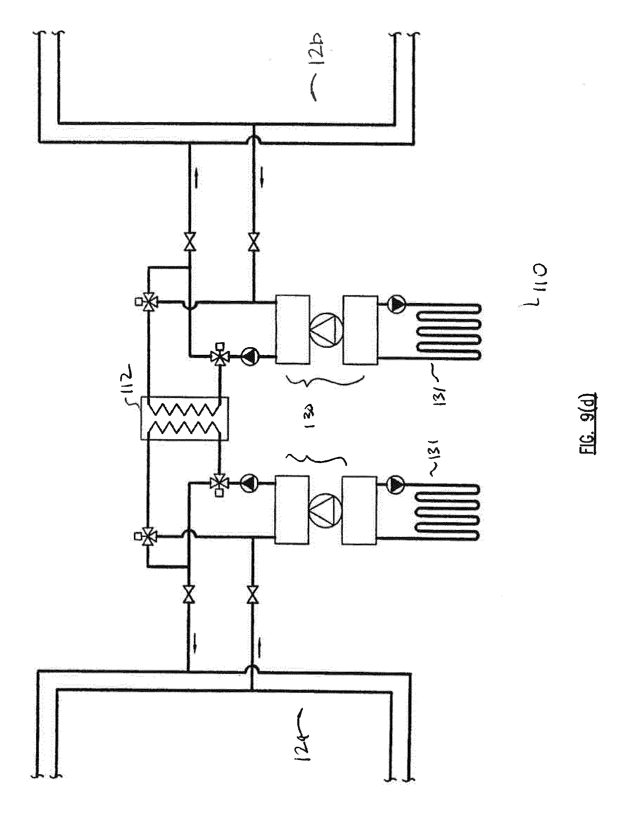

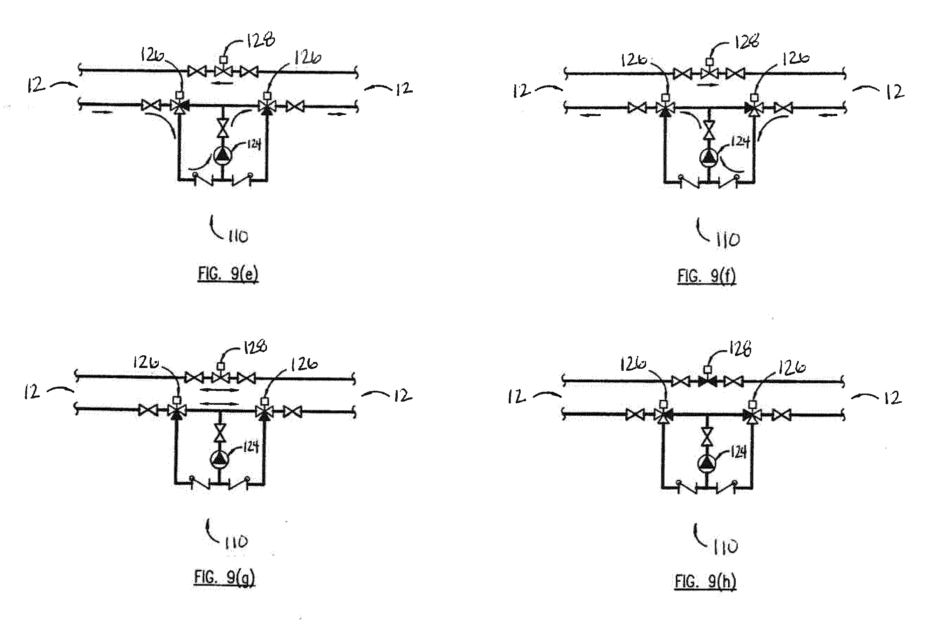

Figures 9(a) to (h) are schematics of a district energy sharing system according to yet other embodiments comprising a pair of thermal energy circuits thermally coupled together by an thermal energy transfer station wherein Figure 9(a) shows each thermal energy circuit thermally coupled to multiple client buildings and a thermal server plant, Figure 9(b) is a detail view of the transfer station according to one embodiment for serving circuits having the same pressure zone, Figure 9(c) is a detail view of the transfer station according to another embodiment for serving circuits having different pressure zones, Figure 9(d) is a detail view of the transfer station according to yet another embodiment for serving circuits having different pressure zones and having a pair of thermal server plants, and Figures 9(e) to (h) show different modes of operation for transfer of heat between circuits of the transfer station shown in Figure 9(b).
Figure 10 is a photograph of a district with an illustration of one embodiment of the district energy sharing system overlaid onto the photographed district.
Figure 11 is a schematic of a process of sharing thermal energy within one embodiment of the district energy sharing system.
Figure 12 is a schematic of a district energy sharing system having a grey water injection assembly according to yet another embodiment.

### Detailed Description of Embodiments of the Invention

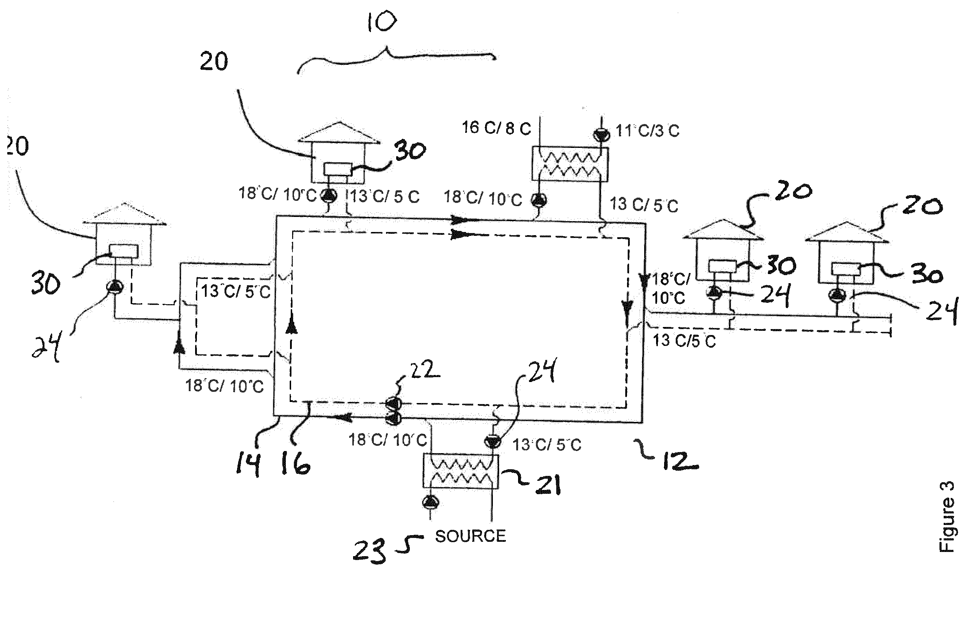

Referring to Figure 3 and according to one embodiment, a district energy sharing system (DESS) 10 comprises a thermal energy circuit 12 which circulates and stores thermal energy in water, at least one client building 20 thermally coupled to the circuit 12 and which removes some thermal energy from the circuit 12 ("thermal sink") and/or deposits some thermal energy into the circuit 12 ("thermal source") (note: the client buildings 20 shown in this Figure are shown only drawing thermal energy from the circuit 12 and thus are all operating as heat sinks), and at least one thermal server plant 21 that can be thermally coupled to external thermal sources and/or sinks (e.g. a geothermal ground source) and whose function is to maintain thermal balance within the DESS 10. The DESS 10 can also include a network control and monitoring system to regulate, measure, and optimize the transfer of thermal energy during system operation (not shown).

The circuit 12 comprises a pair of water conduits 14, 16 respectively flowing water at different temperatures and which serve to transfer and store thermal energy between the sources and sinks (respectively, "warm" and "cool" conduits). A heat transfer apparatus 30 in each building 20 fluidly interconnects the warm and cool water conduits 14, 16 such that warm water can flow from the warm water conduit 14 through the heat transfer apparatus 30 and then into the cool water conduit 16, or vice versa. In the former configuration, the heat transfer apparatus 30 operates to draw heat from the warm water conduit 14 to heat the building 20 and then deposits the cooled water into the cool water conduit 16; in the latter configuration, the heat transfer apparatus 30 operates to extract heat from the building 20 to cool the building 20 and deposits that extracted heat into the warm water conduit 14.

The warm water conduit 14 and cool water conduit 16 are two separate and parallel closed loops of piping which are fluidly interconnected only at the client buildings 20 and server plant 21. The piping system in this embodiment uses plain water as a heat transfer liquid and the pipe is single wall uninsulated High Density Polyethylene (HDPE). However, other liquids can be used as a heat transfer liquid according to another embodiment, since the circuit 12 is a closed fluid loop.

One or more circulation pumps 22 are fluidly coupled to the piping and are operated to circulate water through the warm and cool water conduits 14, 16. In particular, water is pumped through the warm water conduit 14 at a first temperature ("warm water") and cool water is pumped through the cool water conduit 16 at a second temperature that is lower than the warm water temperature ("cool water"). A suitable temperature range for the warm water is between 10 and 30°C and a suitable temperature range for the cool water is between 5 and 20°C. The two-pipe arrangement provides an assurance that all client buildings 20 get the same temperature water for the supply to the heat pumps.

While Figure 3 is shown to have a pair of circulation pumps 22 each fluidly coupled to the warm and cool water conduits 14, 16, these pumps can be replaced or supplemented by circulation pumps 24 in one or more client buildings 20 (client pumps), or in the server plant 21 (server pumps) to circulate water throughout the circuit 12.

In normal use any client building 20 that has a net heating load draws water off the warm water conduit 14 and returns it to the cool water conduit 16, and any client building 20 in net cooling mode draws water off the cool water conduit 16 and returns it to the warm water conduit 14. Transfer of water from warm to cool water conduits or cool to warm water conduits increases the pressure of the receiving conduit, driving water back to the other conduit through the thermal server plant 21, where heat is added or removed. This transfer is achieved by natural means or by the use of the circulation pumps 22, 24.

The thermal energy circuit 12 is designed to ensure that the pressure difference between the warm and cool water conduits 14, 16 is always kept as low as possible to ensure that the client pumps 24 do not have to overcome a large head that could limit the flow to the client and increase the pumping horsepower. This is achieved by maintaining low velocities in the water conduits 14, 16 with commensurate low friction loss and by normally maintaining the flow in the warm and cool conduits 14, 16 in the same direction, so that pressure drop from friction is similar in both conduits 14, 16 along the length of the circuit 12.

The thermal energy circuit 12 also acts as a thermal storage device through oversizing the water conduits 14, 16 and varying the temperature in the water conduits 14, 16 over time. A secondary level of thermal storage can be provided by the soil surrounding the conduit that ameliorates temperature change during high load conditions. Oversizing the conduits 14, 16 also reduces friction loss and pumping horsepower.

When heat is removed from the thermal energy circuit 12 to heat one or more client buildings 20 in the district and heat removed from one or more other buildings 20 in the district is transferred to the thermal energy circuit 12 , these client buildings 20 in effect share the thermal energy in the thermal energy circuit 12 in their heating and cooling processes which is more energy efficient than having the client buildings 20 discharging heat into the environment as a result of independently operated heating and cooling processes. While it may be possible that the thermal energy in the thermal energy circuit 12 can be maintained fairly constant by designing the DESS 10 so that the client and heat source buildings 20 collectively remove and return about the same amount of thermal energy, the thermal sever plant 21 is provided to ensure a thermal balance is maintained in the DESS 10. That is, a net amount of thermal energy removed from the circuit 12 by the client buildings 20 is returned to the circuit 12 by the thermal server plant 21 by drawing thermal energy from a coupled external thermal source 23; similarly, a net amount of energy deposited into the circuit 12 by the client buildings 20 is removed by the server plant 21 and stored in a coupled external heat sink 23. The heat source or sink 23 for the server plant 21 can be a geo-exchange field, ground water, ocean, lake, sewer, effluent, refrigeration plants, solar collectors, ice rinks, or industrial processes. These alternatives for server plant types include any source that can produce or absorb heat, and transfer the heat to or from the warm and cool water conduits.

Selecting suitable server heat sources will depend at least on part on the temperature and capacity profiles as well as the form of the heat provided by the heat source. Some server heat sources provide consistent capacity whereas others provide a variable capacity based on weather conditions, time of year, time of day and other conditions. Selection of server heat sources is based on the ability to satisfy client load profiles, and computer modelling of capacity profiles can be performed to design a system that can operate satisfactorily under any anticipated load.

Selecting suitable server heat sinks will depend at least on the ability of the heat sink to store thermal energy for short or long terms. The ability to store energy is based on the mass and specific heat of the storage medium as well as the rate of heat loss or gain. A viable high capacity storage system can incorporate phase change medium where the heat of fusion can be used to store large amounts of energy in a relatively small space and without large temperature change. Eutectics can be selected that will pass through a phase change at a specific temperature.

Short-term storage would typically be for a few hours and could be applied to diurnal variations. Long-term storage could be applied to seasonal variations depending upon the ability of the medium to hold the heat. Thermal degradation is of less concern for short term than it is for long-term storage. Even if the storage degrades, it can be viable if it is being charged by energy that would otherwise be wasted.

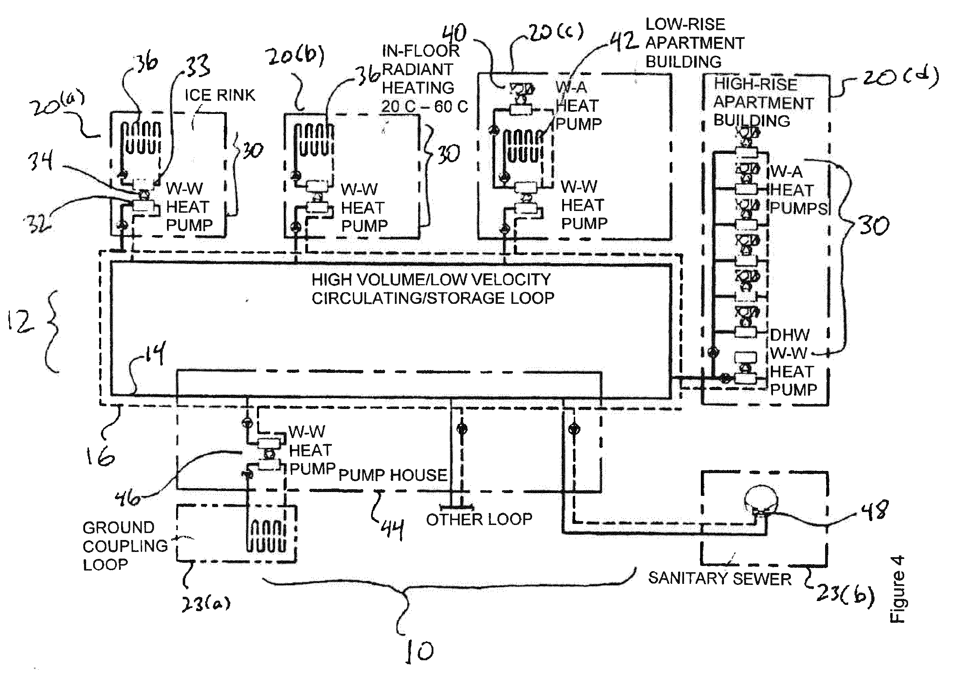

Referring now to Figure 4, the heat transfer apparatus 30 in each building 20 can comprise one or more heat pump assemblies that can be configured to transfer low-grade (low temperature) energy from the warm water conduit 14 into higher-grade energy that can be used to heat the building 20. One or more other heat pump assemblies can be configured to provide cooling for the building 20 and reject the by-product heat to the cool water conduit 16. Yet some other heat pump assemblies having a valve switching assembly (as shown in Figure 4 and as will be described in detail below) can be selectively configured to provide heating or cooling to a building 20 by drawing heat from the warm water conduit 14 or rejecting heat into the cool water conduit 16.

Heat pump assemblies can be water-to-air or water-to-water. Water-to-air heat pump assemblies have heat pumps that are typically small units that serve single rooms and can be fed directly by the DESS 10 or by a closed piping loop that interacts with the DESS 10 through a circuit heat exchanger. The heat pumps in the buildings 20 can be operated in heating and/or cooling mode so that the heat transfer to the circuit 12 is the net difference between the heating and cooling loads. The DESS 10 thus could replace a boiler and a cooling tower traditionally present in some buildings.

Each heat pump assembly comprises a pair of heat exchangers (respectively "circuit heat exchanger" 32 and "building heat exchanger" 33,) and a heat pump 34 thermally coupled to but fluidly separated from both heat exchangers 32, 33. The circuit heat exchanger 32 is in fluid communication with both the warm water conduit 14 and the cool water conduit 16. More particularly, the circuit heat exchanger 32 has an inlet in fluid communication with the warm water conduit 14, and an outlet in fluid communication with the cool water conduit 16 such that water flows from the warm water conduit 14 through the heat exchanger 32 and then to the cool water conduit 16. The heat pump 34 is arranged so that its evaporator is in thermal communication with the circuit heat exchanger 32 such that some thermal energy in the warm water flowing through the heat exchanger 32 is absorbed by the working fluid in the heat pump 34, thereby cooling the circuit water which then flows into the cool water conduit 16. The heat pump 34 is also arranged so that its condenser is in thermal communication with the building heat exchanger 33 such that the thermal energy absorbed from the circuit water is discharged into the building 20.

In the embodiment shown in Figure 4, an ice rink 20(a) requires cooling and thus serves as a heat source, and the following buildings require heating and thus serve as heat sinks: a residential home 20(b), a low-rise apartment building 20(c), and a high-rise apartment building 20(d). The residential home 20(b) requires space heating and is heated by radiant heating; a radiant heating system 36 in each of these buildings 20(a), 20(b) is thermally coupled to the building heat exchanger 33 of each respective heat transfer apparatus 30 and to the space which requires heating in each building 20(a), 20(b). The low-rise apartment building 20(c) also requires space heating and is heated by both a forced air system 40 and by a radiant heating system 42 both of which are thermally coupled to the building heat exchanger 33 in this apartment building 20(c); the forced air system 40 has a water-to-air heat pump assembly which transfers heat from a radiant hot water loop coupled to the building heat exchanger 33 to air ducts in the building 20(c). The high-rise apartment building 20(d) comprises a series of heat transfer apparatuses 30 to provide space heating and domestic hot water heating to the building 20(d). The heat transfer apparatuses 30 which provide space heating have water-to-air heat pumps and building heat exchangers 33 which are thermally coupled to air ducts in the building 20(d); the heat transfer apparatus 30 which provides domestic hot water heating has its building heat exchanger coupled to a domestic water supply in the building 20(d).

The server plant 21 in the embodiment shown in Figure 4 is a pump house 44 which is thermally coupled to a geothermal ground loop 23(a) and a sanitary sewer 23(b). The ground loop can act as a heat source and sink and the sanitary sewer 23(b) can serve as a heat source. The pump house 44 comprises a heat pump assembly 46 having a pair of heat exchangers and a heat pump thermally coupled to but fluidly separated from both heat exchangers: a circuit heat exchanger is fluidly coupled to the thermal energy circuit 12 and a ground loop heat exchanger is fluidly coupled to a fluid loop which extends into and out of the ground. More particularly, the circuit heat exchanger has an inlet fluidly coupled to the cool water conduit 16 and an outlet fluidly coupled to the warm water conduit 14. When the ground source is used as a heat source, geothermal energy is absorbed by the fluid pumped through the ground loop; this thermal energy is transferred to the water flowing from the cool water conduit 16 through the circuit heat exchanger. Additional thermal energy can be obtained from warm wastewater discharged from the sanitary sewer 23(b); a sanitary sewer heat transfer apparatus 48 comprises a heat exchanger which is thermally coupled to the wastewater and which has an inlet fluidly coupled to the cool water conduit 16 and an outlet fluidly coupled to warm water conduit 14..

A programmable controller (not shown) can be programmed to control operation of the heat pump in the heat pump assembly 46 so that sufficient geothermal energy is transferred to thermal energy circuit 12 to maintain the warm water within the desired warm water temperature range.

Referring now to Figures 5(a) to (i) and according to another embodiment, one or more client buildings 20 in the district can be provided with a reversible heat pump assembly 50 that can either draw heat from the circuit 12 or deposit heat into the circuit 12. The heat pump assembly 50 comprises a reversible heat pump 52, a circuit heat exchanger 56 thermally coupling the heat pump 50 to the circuit 12, a building heat exchanger 58 thermally coupling the heat pump 52 to the client building 20, and a valve assembly and circulation pump 55 both fluidly coupled to the warm and cool conduits 14, 16 by piping 54 and which can be configured to direct either cool water from the cool water conduit 16 or warm water from the warm water conduit 14 through the circuit heat exchanger 56. The heat pump 52 is thermally coupled to but fluidly separated from both the circuit heat exchanger 56 and building heat exchanger 58. The heat pump assembly 50 can be operated in a heating mode in which case the valve assembly is configured to direct water from the warm water conduit 14 through the circuit heat exchanger 56 and to then into the cooled water conduit 16, and to operate the heat pump 52 to absorb heat from water flowing through the circuit heat exchanger 56 and to discharge heat into the building heat exchanger 58 (which in this Figure is shown coupled to a forced air system of the building, but can be coupled to any building heat distribution system as is known in the art). Conversely, the heat transfer apparatus 50 can be operated in a cooling mode in which case the valve assembly is configured to direct cool water from the cool water conduit 16 through the circuit heat exchanger 56 and into the warm water conduit 14, and to operate the heat pump 52 to absorb heat from the building heat exchanger 58 and to discharge this absorbed heat into water flowing through the circuit heat exchanger 56.

Figures 5(a)-(c) illustrates one embodiment of the valve assembly comprising a pair of three-way valves 60, 62. A first three-way valve 60 is fluidly coupled by piping 54 to the warm water conduit 14, cool water conduit 16 and the inlet of the circuit heat exchanger 56; a second three-way valve 62 is fluidly coupled to the warm water conduit 14, cool water conduit 16, and the outlet of the circuit heat exchanger 56. When the heat transfer apparatus 50 is set in the heating mode as shown in Figure 5(a), the first three way control valve 60 is closed to the cool water conduit 16 but open to the warm water conduit 14 and the inlet of the circuit heat exchanger 54 and the second three-way control valve 62 is closed to the warm water conduit 14 but open to the cool water conduit 16 and the outlet of the circuit heat exchanger 54. As a result, a water pathway is provided through the piping 54 for water to flow from the warm water conduit 14, through the circuit heat exchanger 56 and to the cool water conduit 16. When the heat pump assembly 50 is set in the cooling mode as shown in Figure 5(b), the first three-way valve 60 is closed to the warm water conduit 14 but open to the cool water conduit 16 and the inlet of the circuit heat exchanger 54, and the second one-way valve 62 is closed to the cool water conduit 16 but is open to the warm water conduit 14 and the outlet of the circuit heat exchanger 54. As a result, a water pathway is provided through the piping 54 for water to flow from the cool water conduit 16, through the circuit heat exchanger 56 and to the warm water conduit 16. The circulation pump 55 is coupled to the piping 54 at the inlet of the circuit heat exchanger 56 and is operated to effect such flow.

The pair of three-way control valves 60, 62 can be solenoid valves which are communicative with a controller programmed to configure the control valves 60, 62 in their respective cooling mode configuration and heating mode configuration. Alternatively the pair of three way control valves 60, 62 can be manually adjustable between their cooling and heating mode configurations.

When the heat pump is off as shown in Figure 5(c), both control valves 60, 62 close one of their ports to stop flow of warm water and hence flow of cold water through the piping 54. Alternatively both valves 60, 62 close one of their ports to stop the flow of cool water and hence flow of warm water. In either position, water can still circulate through the piping 54 via the remaining open ports.

The control valves 60, 62 can be a modulating valve which can be modulated by a temperature sensor (not shown) in the supply conduit to the heat pump 52 or a refrigerant pressure controller to mix cool water discharged from the heat pump 52 with the warm water from the warm water conduit 16 to maintain a maximum entering water temperature or maximum refrigerant pressure.

Instead of a pair of three-way control valves, the same functionality can be achieved by a single four-way control valve 63 as shown in Figures 5(d) to (f) and according to another embodiment. The four-way control valve 63 has four ports A, B, C, and D and has a rotary actuator that switches flow so that in one position it connects port A to port B and port C to port D. When the valve switches to its other position, it connect port A to port C and port B to port D. Piping 54 is provided so that an inlet port of the circuit heat exchanger 54 is coupled to port A, the warm water conduit 14 is connected to port B, the cool water conduit 16 is coupled to port C, and an outlet port of the circuit heat exchanger 54 is coupled to port D. In a first position of the control valve 63 warm water flows through the piping 54 and into the circuit heat exchanger 54 and the cool water is discharged from the circuit heat exchanger 54 into the cool water conduit 16. In the second position of the control valve 63, cool water is directed into the circuit heat exchanger 54 and warmed water is discharged to the warm water conduit 16.

To stop flow through the heat pump, a two-way control valve 65 that closes when the heat pump is off is placed in either the warm or cool supply pipes.

As can be seen in Figures 5(g) to (i), two pairs of two-way control valves 64, 66 can be operated in a similar pair to the one pair of three-way control valves 60, 62 to enable the heat transfer apparatus to operate in both cooling and heating modes. In these drawings, the control valves 64, 64 which are open are shown in outline, and the control valves which are closed are shown in solid black. As can be seen by the arrows in Figure 5(g), a fluid pathway through the piping 54 is defined by the opened and closed control valves 64, 66 that warm water flows from the warm water conduit through the circuit heat exchanger 56 and to the cool water conduit 16. Similarly, a fluid pathway is shown by the arrows in Figure 5(h) showing water from the cool water conduit 16 flowing through the circuit heat exchanger 56 and to the warm water conduit 14. All control valves 64, 66 are shown closed in Figure 5(i) thereby preventing flow through the piping 54.

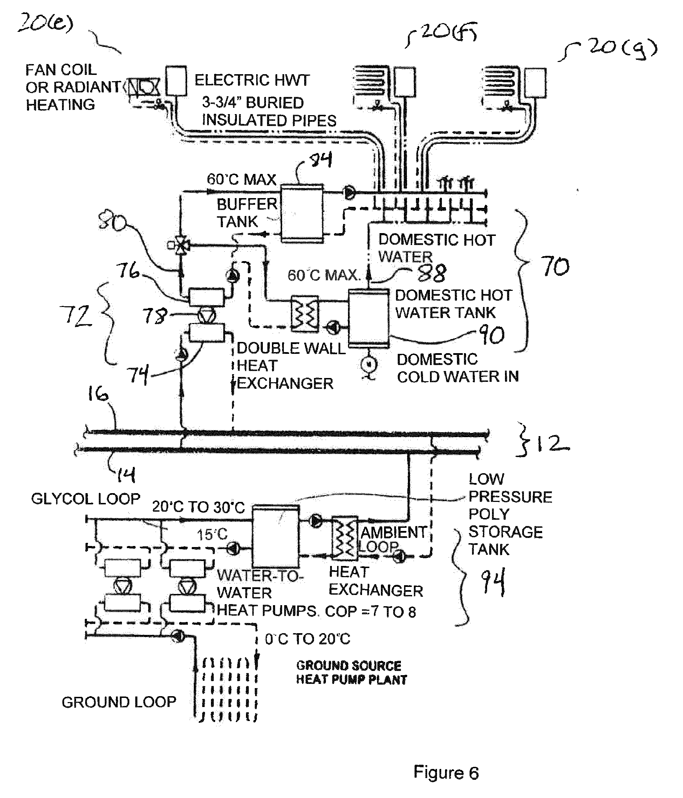

Referring now to Figure 6 and according to yet another embodiment, the DESS 10 can be configured with one heat transfer apparatus 30 servicing multiple client buildings 20 (hereinafter referred to as a local heat transfer plant 70). The local heat transfer plant 70 comprises a heat pump assembly 72 having a pair of heat exchangers 74, 76 and a heat pump 78 thermally coupled to these two heat exchangers 74, 76. One of these heat exchangers 74 is the circuit heat exchanger which fluidly interconnects the warm and cool water conduits 14, 16 in the same manner as previously described, i.e. with an inlet coupled to the warm water conduit 14 and an outlet coupled to the cool water conduit 16. The other heat exchanger is the building heat exchanger 76 which is fluidly coupled to a separate water circuit (hereinafter "building water circuit" 80). The evaporator of the heat pump 78 is in thermal communication with the circuit heat exchanger 76 and the condenser of the heat pump 78 is in thermal communication with the building heat exchanger 76 such that the heat pump 78 can be operated to transfer heat from the thermal energy circuit 12 to the building water circuit 80. Water in the building water circuit 80 is circulated by pumps in the local heat transfer plant 70 to space heating systems in each building 20(e), 20(f), 20(g), which can be a fan coil air heating system as shown in building 20(e) or a radiant heating system as shown in buildings 20(f), 20(g). A buffer tank 84 is fluidly coupled to the building water circuit 80 to and allows the heat pump to run long enough to avoid short cycling when there is only a small load. The building water circuit 80 is also fluidly coupled to a domestic hot water heat exchanger 86 which in turn is thermally coupled to a domestic hot water circuit 88. The domestic hot water circuit 88 includes a domestic hot water tank 90 and piping 91 which feeds heated water to each building 20(e), 20(f), 20(g) for domestic hot water use in those buildings. It can be seen that thermal energy in the thermal energy circuit 12 is transferred to the building water circuit 80 and then to the building heating systems to provide space heating, and from the building water circuit 80 to the domestic hot water circuit to provided heated domestic water.

The thermal server plant in this embodiment is a geo-exchange server plant 94 that is similar to the pump house 44 shown in Figure 4 except that the geo-exchange server plant 94 is thermally coupled to a ground source only.

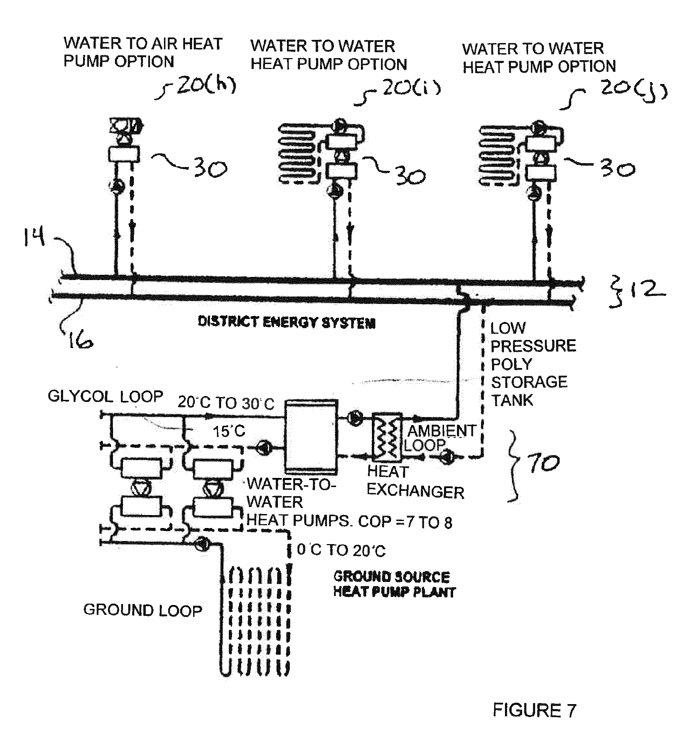

Referring now to Figure 7 and according to yet another embodiment, the DESS 10 can be configured so that each building 20(h), 20(i), 20(j) in the district has its own heat transfer apparatus 30, and the thermal server plant is the geo-exchange plant 94 as shown and described for the Figure 6 embodiment. The heat transfer apparatuses 30 in each of these buildings 20(h), 20(i), 20(j) can be different types of space heating systems, such as a water to air heat pump assembly in building 20(h) used in a forced air heating system, and water-to-water heat pump assembly in buildings 20(i) and 20(j) used in a radiant heating system. Alternatively but not shown, the heat transfer apparatuses 30 can also include one or more cooling systems (not shown) comprising a circuit heat exchanger configured to absorb heat from a building and discharge the absorbed heat into the thermal energy circuit 12. Also alternatively, but not shown, the DESS 10 can include a local heat transfer plant like the plant 70 in the Figure 6 embodiment which services other buildings in the district, such that some buildings in the describe are collectively serviced by a local heat transfer plant and some buildings have their own heat transfer apparatus.

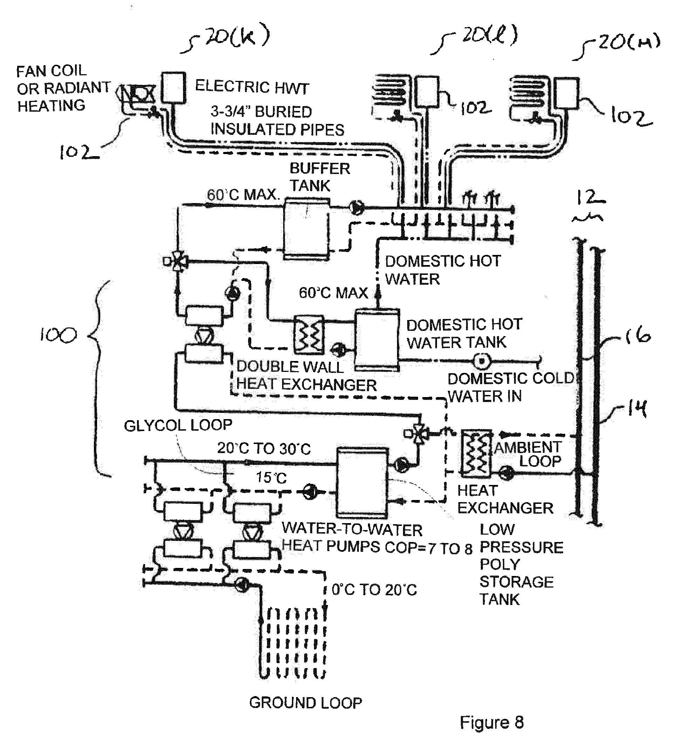

Referring now to Figure 8, and according to yet another embodiment, the local heat transfer plant 70 and geo-exchange server plant 94 shown in Figure 6 can be combined into a single combined plant 100 which services multiple client buildings 20(k), 20(l), 20(m). These client buildings are each provided with a space heating system 102 thermally coupled to the combined plant 100 and with domestic hot water piping also thermally coupled to the combined plant 100 in the same manner as described for the heat transfer plant 70 in the Figure 6 embodiment. In combining the heat transfer plant 70 and thermal server plant 94, the heat pump assembly 72 becomes thermally coupled to the heat pump plant water loop instead of to the thermal energy circuit 12. The server plant maintains its circuit heat exchanger which is in fluid communication with the thermal energy circuit 12, and with the server plant water loop. Thus, heat transferred from the thermal energy circuit 12 to the server plant water loop via the heat exchanger or from a ground source water loop via the ground heat source heat transfer apparatus can be used to provide space heating and domestic hot water to the buildings 20(k), 20(l), 20(m).

Referring to Figure 9(a) and according to yet another embodiment, a pair of DESS 10(a), 10(b) (first and second DESS A and B) can be thermally and/or fluidly coupled together by a thermal energy transfer station 110, embodiments of which are shown in Figures 9(b) to (d).

The warm and cool water conduits 14, 16 in each circuit 12 (Loop A, and Loop B) are arranged so that the water travels in the same direction in each conduit 14, 16 to maintain similar pressure in each conduit 14, 16 at any point. The design is based on each circuit 12 usually having one or more server plants 21 sized to satisfy all the client buildings 20 in the circuit 12. However server plant capacity and client building loads can vary from minute to minute and season to season such that any one circuit 12 can end up with an imbalance that causes the warm and cool pipe temperatures to drift above or below a set point. Conversely, to achieve improved performance, an operator may want to change one circuit's temperature in order to store energy for later use. Another reason to transfer thermal energy from one circuit 12 to another is the need to store surplus energy from one server plant such as a wastewater treatment plant in a geo-exchange server that can act a s a thermal battery.

When and if there is a thermal imbalance and thermal energy needs to be transferred from one circuit 12(a) to another 12(b), or through a series of circuits 12. To achieve this, a cross connection between circuits 12 is provided by the thermal energy transfer station 110 to transfer heat from one circuit 12 to the other.

Three different embodiments of the energy transfer station 110 are described, as follows:
1. Transfer of heat between circuits 12(a), (b) within the same pressure zone (Figure 9(b).
2. Transfer of heat between circuits 12 (a), (b) of different pressure zones (Figure 9(c)).
3. Transfer of heat between circuits 12 (a), (b) different pressure zones and having at least one thermal server plant in the transfer station 110 (Figure 9(d)).

### 1. Transfer of heat between loops in the same pressure zone

Referring to Figures 9(b) and (e) to h), the transfer station 110 comprises a warm and cool water transfer conduit 120, 122 respectively coupling the warm and cool water conduits of the two thermal energy circuits 12(a). A pump 124 is coupled to the warm water transfer conduit 120 and can be operated to flow water from a first circuit 12(a) to a second circuit 12 (b). The pump 124 has a Variable Speed Drive (VSD) so the flow rate is adjustable.

A changeover assembly 125 comprising a pair of three-way control valves 126 with associated piping and shut off valves coupled to the warm water transfer conduit 120 allow the direction of water flow to reverse. There are four modes of operation based on the positions of the three way control valves 126 (open positions of each valve 126 is shown in outline; the closed position is shown in solid black). Mode 1 pumps water from the first circuit 12(a) to the second circuit 12(b) (Figure 9(e). Mode 2 pumps water from second circuit 12(b) to the first circuit 12(a) (Figure 9(f). Mode 3 allows free flow in either direction with the pump off (Figure 9(g) and Mode 4 allows no flow (Figure 9(h). Mode 4 allows the circuits 12(a), (b) to operate independently with no thermal energy transfer.

When transferring water through several circuits 12 (not shown), it is possible to operate only one pump 124 in Mode 1 or 2 at one transfer station 110 and have the other transfer stations 110 in Mode 3.

A shut off control valve 128 is provided on the cool water transfer conduit 122 to stop flow of water between the circuits 12(a), (b). The shut off control valve 128 is a secondary isolation means that would close off in Mode 4 to ensure that there is no flow through the cool water transfer conduit 122 due to pressure differences between loops that are themselves cross-connected other loops. The shut off control valve 128 is a modulating type that can control the flow based on relative pressures in the two circuits 12(a), (b).

### 2. Transfer of heat between different pressure zones

Referring to Figure 9(c) and for circuits 12(a), (b) operating at different pressures, the transfer station 110 transfers thermal energy between circuits 12(a), (b) without transferring water. The transfer station 110 comprises a liquid-to-liquid heat exchanger 112 with a first and second heat transfer zone that is thermally coupled but fluidly isolated, and piping that fluidly couples the warm and cool water conduits of each circuit 12(a), (b) with the first and second heat transfer zones of the heat exchanger 112. Transfer pumps 114, 116 are providing on the piping coupling each circuit 12(a), (b) to the heat exchanger 112 and can be operated to flow water from each circuit 12(a), (b) respectively through the heat exchanger such that heat can be transferred in the heat exchanger 112 from the warmer circuit to the cooler circuit.

The heat exchanger 112 is a stainless steel, cleanable plate, counter-flow heat exchanger that are able to obtain an approach of 1 Celsius degree. That is, one fluid exits the heat exchanger 112 within 1 Celsius degree of the other fluid's entering temperature. The transfer pumps 114, 116 pump the fluid from the cool water conduit 16 to the warm water conduit 14 in each circuit 12(a), (b). This flow can be reversed so that the transfer pumps 114, 116 pump water from the warm water conduit 14 to the cool water conduit 16 by using the changeover assembly for the pumps used for scenario 1 (not shown).

Since pressure control of the system may be in one loop but not the other, there is optionally a booster pump 118 and associated piping for an increase in pressure, or a PRV if a decrease in pressure is needed.

### 3. Transfer of heat between different pressure zones and a server in one station

Referring to Figure 9(d) a transfer station 110 similar to that shown in Figure 9(c) is provided additionally with a pair of server plants 130 each coupled to the respective piping feeding each side of the heat exchanger 112. This arrangement integrates the heat exchanger 112 into the server plant building and can simplify the pumping and control through the sharing of equipment that provides heat transfer with equipment that is a source or sink. Although each server plant is shown with an exemplary ground source heat source and sink 131, the server plant 130 can be thermally coupled to other heat source and sinks as described above.

A typical arrangement would be one or more energy source/sinks such as geo-exchange heat pumps connected directly to a high pressure upper loop A and another set connected directly to a low pressure lower loop B. Heat exchangers between the high pressure and low pressure loops A, B with the capacity of one set of heat pumps would allow all the heat pumps to serve either the upper or lower loop. This arrangement would also allow the two loops to operate independently or for heat to be transferred from loop to loop without use of the heat pumps.

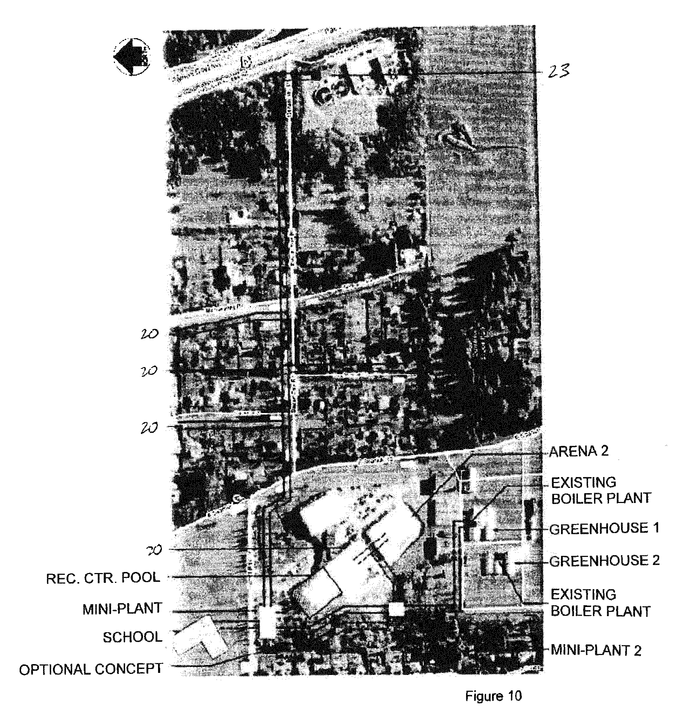

Figure 10 shows a photograph of a district with the DESS 10 shown overlaid in illustration. The DESS 10 includes a waste water heat recovery source 23, residential buildings 20 (client heat sink), an ice arena 20 (client heat sink), and school, pool and green house loads 20. The solid line indicates the warm and cool water conduits of the thermal energy circuit. The dashed lines indicate high temperature delivery conduits.

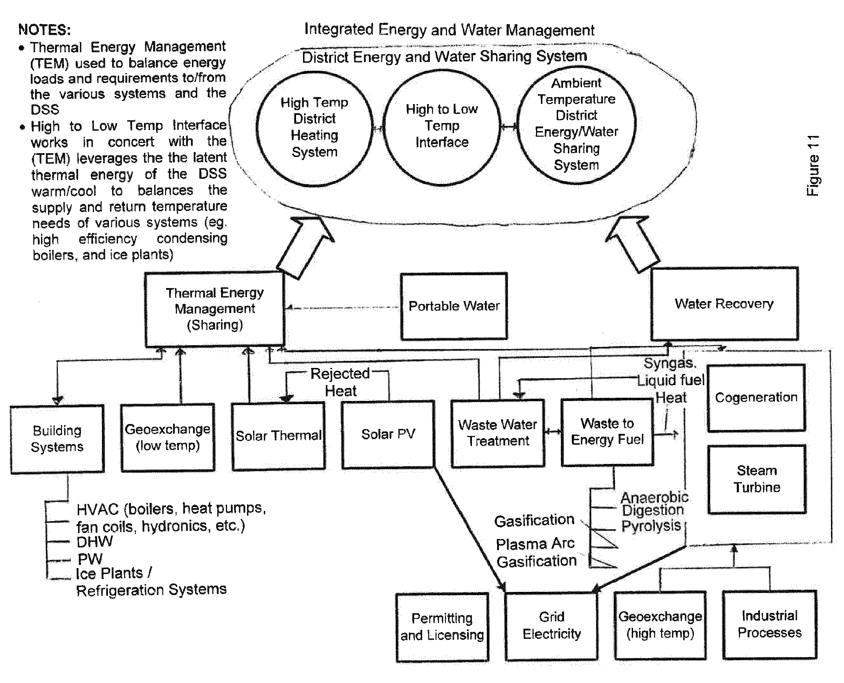

Figure 11 is a block diagram which explains how energy can be managed and balanced from multiple heat sources through the DESS 10, and how water can be recovered where available as a thermal transport medium of the DESS 10.

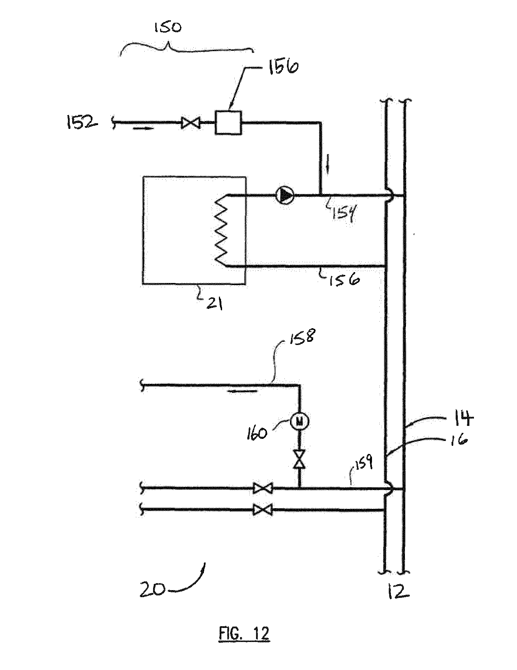

According to another embodiment and referring to Figure 12, the DESS 10 includes a grey water injection assembly 150 for flowing grey water from a grey water source 152 into the thermal energy circuit 12 and transferring at least some of this water to client buildings for certain domestic water uses.

The term "grey water" means non-potable water that does not meet drinking water standards but can be used by a client building for certain purposes such as toilet flushing, exterior washing or irrigation.

In this embodiment, the thermal energy circuit 12, as well as delivering thermal energy to client buildings 20, is capable of providing grey water distribution to the client buildings 20. The grey water can be used for toilet flushing and irrigation, thus dramatically reducing the consumption of potable water. Although the DESS 10 is normally a closed loop, the grey water injection assembly 150 makes the DESS 10 partially open and therefore requires that the piping in circuit 12 be suitable for an open system using suitable materials such as plastic, non-ferrous metals and stainless steel.

The grey water, which is clean effluent from a sewage treatment plant, must meet certain standards to prevent build-up of dirt or growth in the circuit 12 and especially in the heat exchangers. There are also standards to be met for health reasons. However the required standards are much lower than those for potable water.

The injection of grey water does increase the flow of water in the DESS but the grey water demand is much less than the water flow required for the energy transfer. Therefore, the pipe size usually does not need to be increased to accommodate the incoming flow of grey water.

The components of the grey water injection apparatus 150 are described :
A grey water supply conduit 153 fluidly couples the grey water source 152 to piping in a thermal server plant 21; in this case the grey water supply conduit 153 is coupled to a warm water supply conduit 154 as the grey water is warm and can contribute some thermal energy to the circuit 12; however, the grey water supply conduit 153 can alternatively be coupled to a cool water supply conduit 156 especially if the grey water is cool.

The grey water flowing the grey water supply conduit 153 first passes through a filtration device (not shown) to ensure it meets required standards for health, particulate concentration and biological growth potential. A pressure control device 156 is coupled to the grey water supply conduit 153 downstream of the filtration device and serves to regulate the water pressure within the circuit 12. In particular, the pressure control device 156 has a standard pressure boosting pumping system that increases the pressure of the grey water to higher than the DESS 10. The pumping system consists of an arrangement of pumps control valves and cushion tank that delivers a variable flow of water to a set pressure. The set pressure of the pumping system is the required pressure for the DESS 10. The control device 156 can also include one or more PRV to reduce water pressure in the circuit. The pressure control device can further comprise at least one control valve and a cushion tank fluidly coupled to the pump and operable to vary the flow rate of grey water to the warm water conduit.

The warm supply conduit 14 feeding each client building 20 is sized to take both the heat pump flow and the simultaneous grey water flow. For a typical house the DESS supply would be 1" diameter and when the grey water is added it would be 1 ¼" diameter. A buried take-off conduit 158 from the building's warm supply conduit 159 would feed a water meter 160 to measure the grey water use and then the water would connect to an irrigation system and toilet flushing system (not shown) of the building 20.

Use of grey water by any client building 20 could reduce the pressure in the entire circuit 12 and the pressure control device 156 would sense the pressure drop and introduce new grey water into the DESS 10 to maintain the set pressure.

As noted above, the DESS 10 is a modular low grade thermal energy network linking diverse heat sources and clients through a low temperature, water-based piping system, and providing both heating and cooling to buildings within the district. The DESS 10 is applicable to residential, institutional, commercial and industrial districts. Any source of heat that can be transferred to low temperature water can be integrated into the DESS 10 including such diverse sources as geothermal, geo-exchange, ground water, surface water, waste water, refrigeration systems, ice rinks, solar collectors exhaust air streams, diesel generators, and chimneys. The DESS 10 captures this low grade heat from these heat sources and distributes it to clients that, by using heat pumps in heat transfer apparatuses, convert the low grade thermal energy to a higher grade for heating buildings and servicing water, or return heat to the low grade system for air conditioning.

The thermal energy circuit 12 provides both an energy delivery function as well as an energy storage function, and these two functions enable sharing of thermal resources, and through diversity, a reduction in required heat source size. The temperature of the piping used in the thermal energy circuit 12 of the DESS 10 is close to the ground temperature and therefore does not need to be insulated. The piping can be high density polyethylene (HDPE which is very low cost relative to other piping systems and can be used because of the low operating temperature.

Integrating conventional district energy solutions into existing roads and buildings can be a logistical challenge that frequently requires significant capital expenditures before integration can be completed. Advantageously, the modular nature of the DESS 10 and the relative ease of installing and tapping into HDPE piping allow for gradual expansion and offer an early return on capital expenditures.

The DESS 10 can be characterized by use of energy reserves which are sources and/or sinks where energy can be drawn from or stored for future use, such as ground, (static) aquifers, lakes, and oceans. Other sources include those sources that have limited storage capability, variable output range and must be reused in a short period of time. These sources may include large energy recovery sources where heating and cooling need to be drawn off to be used in other areas, such as waste water effluent, air conditioning, ice rinks, industrial processes, and cogeneration processes. Once the available sources are characterized, loads are matched to the sources and multi-loop, hybrid systems developed for combined residential, commercial and industrial applications optimizing the efficiencies of the buildings connected to the DESS 10, minimizing the waste heat rejected to the environment, and reducing peak loads by preconditioning the DESS 10.

The heat captured from the heat sources 23 can also be stored, and storage options can be diverse, including ground sources, thermal cistern storage, system infrastructure or pools. The warm and cool water conduits 14, 16 offer a temperature differential to significantly increase the efficiency of the heat pumps used in the DESS 10. By pulling warm water from the warm water conduit 14 for heating and returning the now much cooler water to the cool water conduit 16 it becomes possible to offset loads. Some systems are typically running in heating mode and some in cooling; the DESS 10 offsets these loads which minimizes the overall requirement for the district. Instead of the primary sources like geo-exchange being the primary heat source or sink they take on a greater role as a tool to balance the energy requirements of the DESS 10 and as a large storage for seasonal loads.

As shown in Figure 12, the DESS 10 can also be used as a conveyor of reclaimed water from a wastewater treatment plant or other process wherein water is recovered. This increases the efficiency of heat recovery from these sources and, subject to the water quality meeting local health and environmental regulations, the reclaimed water may be used to reduce demand for potable water by using the reclaimed water for toilet flushing, irrigation, stream augmentation and other water services not requiring potable drinking water.

The DESS 10 can also be used as a vehicle to help manage storm water by filtering it and, depending on its temperature, routing it through the warm or cool water conduits 14, 16. In the event of a major storm surge the DESS 10 may be able to help divert excess storm water in one area of a community to another area in the community that is better able to handle excess storm water. The DESS 10 addresses the problems of comparable temperature systems, and offers an efficient model for an expandable district system. It utilizes a relatively low temperature warm and cool water conduits 14, 16 in the form of a loop as the primary distribution system. Multiple loops of varying temperatures can be connected and balanced to maximize the efficient transfer of energy from one loop or network to another. In addition to developing large centralized thermal energy systems, smaller localized thermal energy balance transfer stations as shown in Figure 9 ("mini-plants") can be used to add new sources of thermal energy, and manage and balance thermal energy among various loops and segments of loops. This latter approach helps to match the capital costs of the DESS 10 with the current phase of development or the tax base under consideration, while allowing for a more scalable DESS 10 that can easily grow with the development or expansion into an existing community. By using small mini-plants at large sources and sinks it is possible to capture low grade heat from the environment or equipment and balance the warm and cool water conduits 14, 16. This approach also allows for ease of expanding the DESS 10, and each of the plants can divert energy to other parts of the DESS 10. The interconnectivity increases the stability of the DESS 10 and allows for easy expansion.

Mini-plants may contain any number of heat pumps, pumps, heat exchangers and storage tanks to balance and control the efficient collection, storage and transfer of thermal energy from one loop to another. These mini-plants also help in preconditioning the circuit 12 and also maximizing the efficient delivery of excess thermal energy to storage locations throughout the circuit 12. The storage locations may be storage tanks, which can be non pressurized, plastic, fibreglass or metal and can be located inside the mini-plant or buried outside. Multiple heat pumps allow the plant to be expanded as the required capacity increases. The mini-plants may be modular, factory built and tested and the equipment can be housed in a concrete chamber, partly buried, or a low height factory sheet metal enclosure with access panels similar to rooftop equipment. In the case of larger buildings such as multifamily residences or commercial buildings, the miniplants can be incorporated into the buildings.

From an optimization standpoint, available energy sources are evaluated on a site-by-site basis and the DESS 10 is designed around the available sources to minimize the costs and maximize the sustainability of the DESS 10. A DESS 10 can also be used to reduce the overall energy required for a community's heating, cooling, and domestic hot water, by balancing the energy required for heating with the energy rejected from cooling, thereby reducing the overall cost of the infrastructure. The heat rejected from buildings in one area or gathered from one or more source or storage location can be transferred to where heating is required. In this method the load is shared across the district. Similarly, cool water rejected from buildings in heating mode or gathered from one or more sources or storage locations will be used to cool buildings more efficiently. This sharing of heating and cooling energy reduces the overall energy consumption in the network, and reduces the amount of additional sources required.

A series of special components and sub assemblies can form part of the DESS 10 and may include one or more of the following:
- Low head high flow in-line pump arrangements.
- HDPE venturi injection tees for source or client connections to impart kinetic energy to the DESS mains water flow and allow one pipe or two pipe operation. One pipe operation allows one of the two pipes to be shut down while the system still operates at the cost of lower efficiency.
- Two or Four pipe building connection and valve assembly to take advantage of one or two pipe DESS operation.
- In-ground non pressurized stratified heat storage tanks with water, or water and rock, in-fill.
- Mini-plants to connect to a variety of loads, sources and the DESS and arranged to deliver, withdraw, store energy and control the transfer of energy to and from other mini plants and zones in the DESS network.
- Energy metering device and software for flow, heating and cooling.
- Software for network DESS flow and temperature control system.
- Accessible, in-line, remote temperature and pressure monitoring devices.

In North America the most available thermal energy sources are typically low temperature sources, for which heat pumps are required to boost the level of heating or cooling. Many heat pumps are able to get a coefficient of performance over 5.5 when placed in the DESS 10. This has the effect of reducing the overall building energy consumption for heating and cooling by over 80%, and the overall building energy consumption by over 45%. By minimizing the overall electrical energy consumption in the district, other alternative energies become more feasible, further encouraging and increasing the sustainability of the project. When considering the staging of distributed energy sources and maintaining the flexible mechanical systems there are two options: converting all energy sources to a common high temperature (may not be feasible for smaller low grade energy sources) or distributing at ambient temperatures. When retrofitting a neighbourhood, this latter strategy can combined with mini-plant energy centres containing heat pumps that can be used to boost the delivery temperature up to 135°F-180°F, depending on the optimal integration requirements.

This strategy maximizes the efficiency of a low cost and low energy loss ambient temperature distribution system with a high temperature delivery system, that simplifies integration when space in an existing mechanical room cannot be found. Because high temperatures are only used for short distances, line losses can be limited and energy delivered can be better managed, reducing the overall life cycle costs of the DESS 10, while simplifying integration requirements.

The thermal energy circuit 12 represents a potentially significant thermal energy storage system, as a result excess thermal energy can be stored in the circuit 12 by adjusting the average temperature of one of the water conduits 14, 16 in the circuit 12. This ability to store and adjust the water temperature, or preconditioning of the water temperature, can have a number of potential benefits, including peak shaving and load matching. Load matching is done by monitoring both the outside air temperature and building design temperatures and raising or lowering the circuit 12 temperature to better match the expected heating and/or cooling loads, thus allowing the equipment to run more efficiently and improve the performance of the heat pumps. Peak shaving is accomplished by pre-conditioning the circuit 12 ahead to match expected loads prior to reaching a threshold price for commercial and/or residential electricity prices enabling the DESS 10 to perform peak electricity shaving or peak shaving. By pre-conditioning the circuit 12 ahead of peak energy costs for electricity, fewer pumps and heat pumps need to run during these hours and those that do run will run more efficiently. This will reduce the peak load demand costs for buildings with demand load charges and potentially significantly reduce the cost of operation.

Although the circuit 12 represents a storage vessel for thermal energy, additional storage can be added in terms of storage tanks in the district or pre-heat tanks in the building. For example, a preheat tank can be provided as part of the DESS 10.

Another key advantage of the DESS 10 is the use of modular district energy. The DESS 10 provides infrastructure integration which may integrate multiple sources (both sustainable and fossil fuel based), manage overall energy demands and storage requirements across an entire district; and is able to integrate multiple communities and manage the demands and storage capabilities across an entire "grid" or region. The distribution and delivery system integrates low intensity/temperature distribution with high temperature building connection requirements to minimize the cost of retrofitting building systems; provides the benefits of low/ambient temperature distribution with the needs of existing building systems for higher temperature integration; and provides building connections to meet the needs of existing building systems for either low grade thermal energy or higher grade thermal energy.

The DESS 10 provides reliability in that when mini-plants are combined with a warm and cool pipe system in a "grid" framework, individual mini plants can be taken off line for service without compromising the DESS 10 as a whole. Interconnecting modules within the DESS 10 cause improved reliability and retrofitting costs are reduced by best matching the type of building connections to the needs of the building. The DESS 10 can use a plurality of pressure zones and thermal energy transfer zones. Mini-plants provide ideal facilities to integrate different pressure zones within a community or the DESS network. Adjacent areas of the network have their own loops cross-connected with transfer pumps and among two or more zones. To keep pressure in the pipes to a reasonable level that allows for the use of lighter duty pipes, where adjacent loops have substantially different elevations, the cross connections may be by heat exchanger. As discussed earlier, mini-plants also allow for the balancing, management and transfer of energy from one zone to another, and can be set up and controlled to route thermal energy across multiple zones. Energy balancing can be provided given that alternative energy sources have both daily and seasonal variations, making it very difficult or cost prohibitive to build an entire district energy system based on one source, alone. The modular nature of the DESS and its ability to integrate multiple sources reduces the cost of any given source by providing the overall energy demand of the community is met; the energy provided is sustainable and these sustainable sources can be used to increase density of potential redevelopment.

Because high temperatures are only used for short distances, line losses can be limited and energy delivered can be better managed, reducing the overall life cycle costs of the DESS, while simplifying integration requirements. To maximize the efficiency of these higher output temperature heat pumps it may be necessary to pre-condition the DESS circuit temperatures to provide a slightly higher input temperature to these higher output temperature heat pumps. This is particularly important when retrofitting a DESS into an existing community where there are existing buildings with specific heating constraints and a desire to reuse as much of the existing building heating and cooling system as possible. This also means that the overall loop temperature can be more dynamically managed to reflect individual building heating and cooling requirements, thus reducing energy supply costs and maximizing the performance with which energy is transferred into each building on the network. Loop temperatures can be more accurately controlled to reflect the needs of the buildings for either heating and cooling. In building equipment can be controlled to only pull what is needed.

From another aspect the present invention provides a district energy sharing system comprising:
a thermal energy circuit comprising:
   a warm liquid conduit for flow of a heat transfer liquid therethough at a first temperature;
   a cool liquid conduit for flow of the heat transfer liquid therethrough at a second temperature that is lower than the first temperature; and
   a heat pump assembly comprising
      a reversible heat pump;
   a building heat exchanger thermally coupled to the heat pump and for thermally coupling to a client building; and
   a circuit heat exchanger thermally coupling the heat pump to the thermal energy circuit;
   piping fluidly coupling the circuit heat exchanger to the warm and cool liquid conduits;
   at least one circulation pump coupled to the piping; and
   a valve assembly comprising at least one control valve coupled to the piping and switchable between a heating mode wherein a fluid pathway is defined through the piping for flow of the heat transfer liquid from the warm liquid conduit through the circuit heat exchanger and to the cool liquid conduit, and a cooling mode wherein a fluid pathway is defined through the piping for flow of the heat transfer fluid from the cool liquid conduit through the heat exchanger and to the warm liquid conduit.

It may be that the valve assembly is further switchable into an off mode wherein the warm and cool liquid conduits are not in fluid communication with the heat exchanger through the piping.

It may be that the at least one control valve is a modulating valve.

It may be that the valve assembly comprises a pair of three-way control valves wherein a first three-way control valve is fluidly coupled to the warm liquid conduit, cool liquid conduit, and an inlet of the circuit heat exchanger, and a second three-way control valve is fluidly coupled to the warm liquid conduit, cool liquid conduit, and an outlet of the circuit heat exchanger, and wherein when the valve assembly is in the heating mode the first three-way control valve is closed to the cool liquid conduit and open to the warm liquid conduit and the inlet of the circuit heat exchanger, and the second three-way control valve is closed to the warm liquid conduit and open to the cool water conduit and the outlet of the circuit heat exchanger.

It may be that the valve assembly comprises a single four-way control valve having four ports and a rotary actuator, the four ports comprising a first port fluidly coupled to the warm liquid conduit, a second port fluidly coupled to an inlet of the circuit heat exchanger, a third port fluidly coupled to the cool liquid conduit, and a fourth port fluidly coupled to an outlet of the circuit heat exchanger, and wherein the rotary actuator fluidly couples the first and second ports and fluidly couples the third and fourth ports in the heating mode, and fluidly couples the first and fourth ports and fluidly couples the second and third ports in the cooling mode.

From another aspect the present invention provides a district energy sharing system comprising:
a first and a second thermal energy circuit each comprising
a warm liquid conduit for flow of a heat transfer liquid therethough at a first temperature;
a cool liquid conduit for flow of the heat transfer liquid therethrough at a second temperature that is lower than the first temperature; and
a circuit pump coupled to at least one of the warm and cool liquid conduits for pumping the heat transfer liquid therethrough; and
a thermal energy transfer station for thermally coupling the first and second thermal energy circuits, and comprising at least one of:
   a liquid transfer assembly fluidly coupling the first and second thermal energy circuits and comprising a pump operable to flow heat transfer fluid therebetween; and
   a heat exchanger assembly thermally coupling and fluidly separating the first and second thermal energy circuits.

It may be that the thermal energy transfer station comprises only the liquid transfer assembly, which further comprises:
a warm liquid transfer conduit fluidly coupling the warm liquid conduits of the first and second thermal energy circuits;
a cool liquid transfer conduit fluidly coupling the cool liquid conduits of the first and second thermal energy circuits; and
a changeover assembly comprising piping fluidly coupled to the warm or cool liquid transfer conduits and to the pump, and at least one control valve fluidly coupled to the piping and operable in a first mode which defines a fluid pathway through the piping from the first thermal energy to the second thermal energy circuit, and a second mode which defines a fluid pathway through the piping from the second thermal energy circuit to the first thermal energy circuit.

It may be that the thermal energy transfer station comprises only the heat exchanger assembly, which comprises:
a liquid-to-liquid heat exchanger having a first heat transfer zone and a second heat transfer zone thermally coupled to but fluidly separated from the first heat transfer zone;
first liquid transfer piping fluidly coupling the first heat transfer zone to the warm and cool liquid conduits of the first thermal energy circuit and second liquid transfer piping fluidly coupling the second heat transfer zone to the warm and cool liquid conduits of the second energy circuit;
a pair of transfer pumps each respectively fluidly coupled to the first and second liquid transfer piping and operable to flow liquid from the first thermal energy circuit through the first heat transfer zone, and to flow liquid from the second thermal energy circuit through the second heat transfer zone.

It may be that the thermal energy transfer station further comprises a pressure control device and fluid conduit fluidly coupled to the first and second liquid transfer conduits, and operable to the regulate the pressure between the first and second thermal energy circuits, the pressure control device comprising at least one of a pressure reducing control valve and a booster pump.

It may be that the thermal energy transfer station further comprises at least one server plant, each server plant comprising a heat pump assembly thermally coupling one of the first or second liquid transfer conduits to at least one of a heat source and a heat sink.

From another aspect the present invention provides a district energy sharing system as defined in claim 1. Optional features are the subject of claims 2 to 6.

## Claims

1. A district energy sharing system comprising:
a thermal energy circuit comprising
a warm water conduit for flow of water therethough at a first temperature;
a cool water conduit for flow of the water therethrough at a second temperature that is lower than the first temperature; and
at least one circuit pump coupled to at least one of the warm and cool water conduits for pumping the water therethrough;
a grey water injection assembly comprising
a grey water supply conduit fluidly coupled to the warm or cool water conduit and for fluidly coupling to a grey water source such that grey water is supplied to the warm or cool water conduit; and
a pressure control device fluidly coupled to the grey water supply conduit or thermal energy circuit and operable to regulate water pressure within the thermal energy circuit;
a client building heat transfer apparatus fluidly coupled to the warm and cool water conduits and for thermally coupling to a client building such that thermal energy can be transferred between the thermal energy circuit and the client building; and
a grey water take-off conduit fluidly coupled to the warm water conduit and for fluidly coupling to a client building such that grey water can be supplied to the building for non-potable uses.

2. A system as claimed in claim 1 wherein the grey water injection assembly further comprises a filtration device fluidly coupled to the grey water supply conduit upstream of the pressure control device.

3. A system as claimed in claim 1 wherein the pressure control device comprises at least one pump operable to increase the pressure of the grey water above the pressure of water in the thermal energy circuit.

4. A system as claimed in claim 3 wherein the pressure control device further comprises at least one control valve and a cushion tank fluidly coupled to the pump and operable to vary the flow rate of grey water to the warm water conduit.

5. A system as claimed in claim 1 further comprising a server plant comprising:
a circuit heat exchanger thermally coupled to the thermal energy circuit and for thermally coupling to a heat source or a heat sink or both;
piping fluidly coupling the heat exchanger to the warm and cool water conduits; and
a pump coupled to the piping, and
wherein the grey water supply conduit is fluidly coupled to the piping.

6. A system as claimed in claim 1 wherein the grey water has a higher temperature than the water at the second temperature, and the grey water supply conduit is fluidly coupled to the warm water conduit.
